# EUROPÄISCHE PATENTSCHRIFT

(11) **EP 0 564 765 B1**
(45) Veröffentlichungstag und Bekanntmachung des Hinweises auf die Patenterteilung: **28.08.1996**
(21) Anmeldenummer: 93100903.9
(22) Anmeldetag: 21.01.1993
(51) Int. Cl.: F16L 59/18

(54) **Dämmung für Verbindungsflansche oder Armaturen aufweisende Rohrabschnitte einer kältegedämmten Rohrleitung**
Insulation for pipe sections of a pipe, insulated against cold of connecting flanges or armatures
Isolation pour tronçons de canalisations d'une conduite isolée contre le froid des brides d'assemblages ou des armatures

(30) Priorität: 08.04.1992 DE 4211841
(43) Veröffentlichungstag der Anmeldung: 13.10.1993
(73) Patentinhaber: G + H MONTAGE GMBH, D-67059 Ludwigshafen (DE)
(72) Erfinder: Abt, Ludwig, W-4018 Langenfeld (DE); Bartschat, Hartmut, W-6751 Mackenbach (DE); Junghanns, Bernd, W-6840 Lampertheim (DE); Klein, Jürgen, W-5226 Reichshof-Oberagger (DE); Wesuls, Hans, W-6715 Lambsheim (DE)
(74) Vertreter: Grünecker, Kinkeldey, Stockmair & Schwanhäusser Anwaltssozietät

(56) Entgegenhaltungen:
- DE-A- 3 723 394
- DE-C- 894 796
- FR-A- 374 414
- FR-A- 2 465 947

## Beschreibung

Die Erfindung betrifft eine Dämmung für in Zeitabständen zu überprüfende Bauteile, wie Armaturen, Flansche usw. in gedämmten Rohrleitungen, wobei zwischen den Enden der Rohrleitungsdämmung und dem Bauteil Ringräume gebildet sind, mit einer Dämmkassette, mit einem zu öffnenden, aus zwei Halbschalen zusammengesetzten Gehäuse, das im geschlossenen Zustand mindestens an gegenüberliegenden Stirnseiten Durchtrittsöffnungen für die Rohrleitungen, und zumindest eine Einfüllöffnung für aufschäumbaren Kunststoff vorzugsweise PUR-Ortschaum, aufweist, wobei die offenen Seiten der Halbschalen durch eine an den Rändern der betreffenden Halbschalen befestigte, nachgiebige Schaumstoffplatte, Folie oder Kunststoffbahn verschlossen sind.

In wärme- oder kälteisolierten Rohrleitungen bilden zum Beispiel Rohrverbindungsstellen oder Einbaustellen für Armaturen Diskontinuitäten, welche die Installation durchgehender Rohrleitungsdämmungen verhindern. An solchen Stellen in einer Rohrleitung muß die Rohrleitungsisolierung unterbrochen werden, wobei für die erforderliche Unterbrechungslänge neben den Anmessungen des die Diskontinuität in der Rohrleitungen bildenden Konstruktionsteils häufig auch Montageerfordernisse eine Rolle spielen. Die Rohrleitungsdämmungen können dementsprechend zum Beispiel nicht beliebig nahe an eine Flanschverbindung herangeführt werden, und es ergibt sich eine verhältnismäßig große ungedämmte Rohrlänge, für die gesonderte Dämmungsmaßnahmen erforderlich sind.

Eine Dämmkassette umfassende Dämmungen der eingangs erwähnten Art für zum Beispiel Verbindungsflansche oder Armaturen aufweisende Rohrleitungsabschnitte sind aus der DE 37 23 394 bekannt. Das Gehäuse dieser Dämmungen ist aus zwei Halbschalen zusammengesetzt, die unter Einschluß eines zu dämmenden Rohrabschnitts miteinander verbindbar und demontierbar sind. Die einzelnen Halbschalen weisen Einfüllöffnungen für aufschäumbares Kunststoffmaterial (Pur-Ortschaum) auf. Beim Aufschäumen des Kunststoffmaterials wird die Abdeckung aus einem nachgiebigen Folien- oder Bahnenmaterial einerseits gegen die Oberfläche von an einen isolierungsfreien Rohrabschnitt angrenzenden Rohrleitungsdämmungen gepreßt, im Bereich des isolierungsfreien Rohrabschnitts aber weiter so verformt, daß sie sich in die zwischen den Unterbrechungsenden der Rohrleitungsdämmung gebildeten Ringräume um den isolierungsfreien Rohrabschnitt, der zum Beispiel eine Flanschverbindung aufweist, hinein ausdehnt.

Wenn zum Beispiel eine Kältedämmung des Rohrabschnitts erforderlich ist, sollte die Bildung von Räumen, in denen sich Kondenswasser niederschlagen kann, möglichst vermieden werden. Dann wäre es erforderlich, die Abdeckungen aus einem nachgiebigen Material unter Auffüllung des abgedeckten Schalenraums mit in diesem Schalenraum aufgeschäumtem Material soweit auszudehnen, daß der gesamte Raum um den dämmungsfreien Abschnitt zwischen den Rohrleitungsdämmungen ausgefüllt wird. Dabei besteht die Gefahr, daß sich die ausgedehnte Abdeckung zum Beispiel an Teilen einer Armatur oder Schraubverbindungen verhakt, so daß die eine Wiederverwendung gewährleistende zerstörungsfreie Demontierbarkeit der Dämmung beeinträchtigt ist.

Andererseits erfordert eine sehr starke Ausdehnung der Abdeckungen die Erzeugung eines hohen Druckes durch das aufschäumende Material, was wiederum eine hohe Enddichte dieses Materials zur Folge hat.

Es ist die Aufgabe der vorliegenden Erfindung, eine Dämmung der eingangs erwähnten Art vorzuschlagen, die insbesondere bezüglich einer Verwendung als Kältedämmung gegenüber der beschriebenen bekannten Dämmung dieser Art verbessert ist.

Diese Aufgabe wird erfindungsgemäß durch eine Dämmung mit den Merkmalen von Patentanspruch 1 gelöst. Vorteilhafte Ausführungsformen ergeben sich aus den abhängigen Ansprüchen.

Eine Ausführungsform der Erfindung ist dadurch gekennzeichnet, daß die Ringräume durch ein mit der äußeren Rohrleitungsdämmung im wesentlichen fluchtendes Abdeckelement (oder sogenannte Mantelabdeckungen) abgedeckt und abgedichtet sind, und daß die die Rohrleitungsdämmung umgreifenden Halbschalen der Dämmkassette abschließend ausgeschäumt sind.

Indem die Dämmstoffplatte, Folie oder Kunststoffbahn gegen die Mantelabdeckung anliegt und den Ringraum nicht konturfolgend ausfüllt, kann ein Verhaken verhindert und damit eine problemlose Demontierung der Dämmung gewährleistet werden. Durch die Abdichtung des Ringraums mit Hilfe der Mantelabdeckung können korrosionsfördernde Niedeschläge in den Ringräumen vermieden werden. Weiterhin ist durch diese erfindungsgemäße Lösung für eine Kältedämmung eine verbesserte Dämmwirkung dadurch erreichbar, daß sowohl in den mit Dämmstoffmaterial ausfüllbaren Ringräumen als auch in den durch die nachgiebige Folie oder Kunststoffbahnen abgeschlossenen Schalenraum ein Dämmstoffmaterial, zum Beispiel ein Schaumstoffmaterial, mit sehr geringer Dichte und damit hoher Dämmwirkung eingesetzt werden kann. Die Materialdichte in dem abgedeckten Schalenraum kann deshalb verhältnismäßig gering sein, weil über das aufschäumende Schaumstoffmaterial kein hoher, eine starke Verformung der Abdeckungen bewirkender Druck zum weiteren Ausdehnen der Abdeckungen in die Ringräume erzeugt werden muß, woraus sich eine hohe Enddichte des aufgeschäumten Materials ergeben würde. Indem erfindungsgemäß die den ausfüllbaren Ringraum bildende Mantelabdeckung verwendet wird, die einen andererseits zur Abdichtung der Dämmung erforderlichen Mindestdruck der Abdeckungen aufnehmen kann, übt die Abdeckung keinen Druck auf das in dem Ringraum angeordnete Dämmstoffmaterial aus. Damit ist der Einsatz von wenig widerstandsfähigem Dämmstoffmaterial geringer Dichte und dementsprechend hoher Dämmwirkung innerhalb der Ringräume gewährleistet.

Durch die im wesentlichen fluchtende, durch die Mantelabdeckung gebildete Anlagefläche für die Abdeckungen ist nur eine minimale Verformung der gegen den zu dämmenden Rohrleitungsabschnitt anliegenden Abdeckungen aus Folien- oder Kunststoffbahnmaterial erforderlich.

Vorzugsweise besteht die Mantelabdeckung aus einem Hohlzylinder aus dünnem Blech, der einen abdichtbaren Längsschlitz derart aufweist, daß er zur zerstörungsfreien Demontage unter Biegung aufweitbar ist.

Weitere vorteilhafte Ausgestaltungen der Erfindung gehen aus den Unteransprüchen hervor.

Die Erfindung soll nun anhand eines Ausführungsbeispiels und der sich auf dieses Ausführungsbeispiel beziehenden Zeichnungen näher erläutert und beschrieben werden. Es zeigen:
- Fig.1: ein Ausführungsbeispiel für eine teilweise demontierte Dämmung nach der Erfindung in einer perspektivischen Ansicht,
- Fig.2: die Dämmung von Fig. 1 im zusammengesetzten Zustand in einer Ansicht in Richtung der Rohrleitung (teilweise geschnitten), und
- Fig.3: die Dämmung von Fig. 1 in einer Schnittdarstellung gemäß der Schnittlinie II-II von Fig. 2.

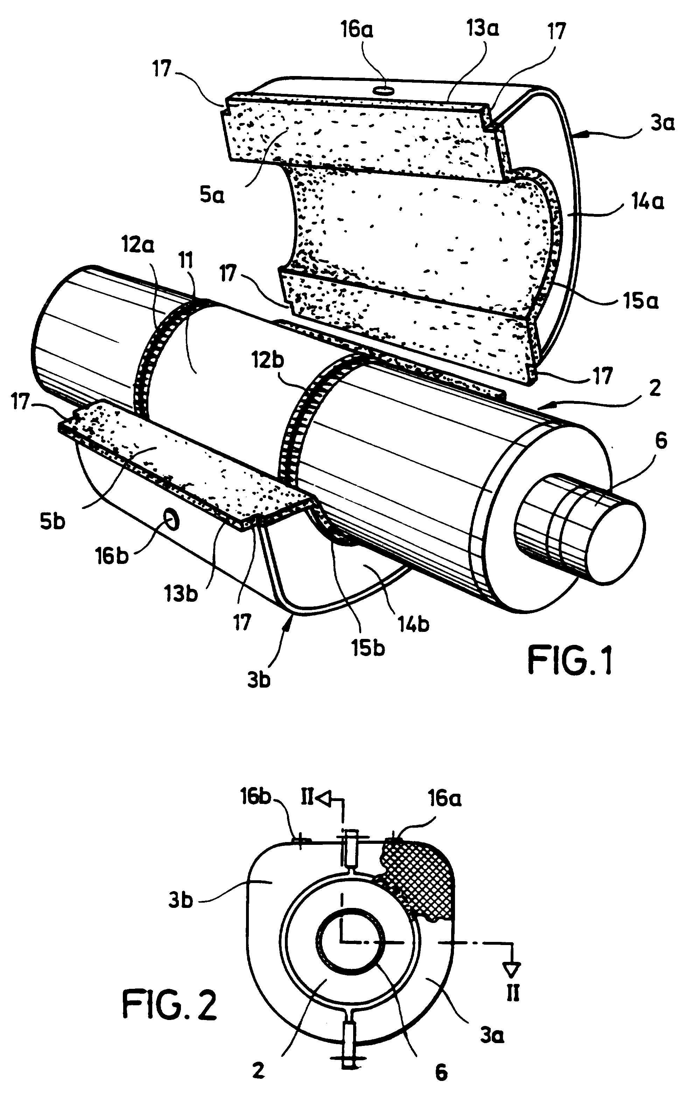

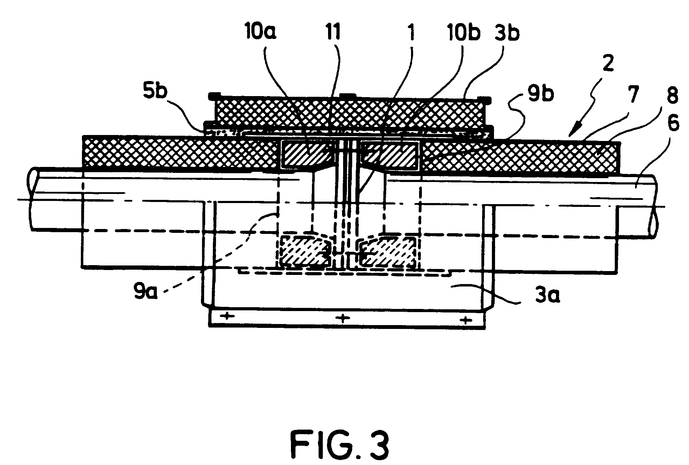

In den Fig. 1 bis 3 ist mit dem Bezugszeichen 2 eine Rohrleitungsdämmung für ein Leitungsrohr 6 bezeichnet. Wie aus der Fig. 3 hervorgeht, weist das Leitungsrohr 6 eine Flanschverbindung 1 auf, über die zwei Rohrteilstücke miteinander verschraubt sind. Die einen Blechmantel 7 und zwischen dem Blechmantel 7 und dem Rohr 6 Dämmstoffmaterial aufweisende Rohrleitungsdämmung 2 ist über die Länge eines die Flanschverbindung 1 umfassenden Rohrabschnitts des Rohrs 6 unterbrochen, wobei in dem gezeigten Ausführungsbeispiel die der Flanschverbindung 1 zugewandten Unterbrechungsenden der sich zu beiden Seiten des Flansches erstreckenden Dämmung 2 den gleichen Abstand zu der Flanschverbindung aufweisen. Die Enden sind mit ringförmigen Abdeckungen 9a und 9b versehen, durch die ein Austreten von Dämmstoffmaterial 8 verhindert wird.

In dem durch die Unterbrechung der Rohrleitungsdämmung 2 gebildeten Zwischenraum um die Flanschverbindung 1 sind in Ringräumen zu beiden Seiten der Flanschverbindung 1 jeweils aus zwei Hälften bestehende Ringteile 10a und 10b eingelegt. Die Ringteile 10a und 10b weisen eine solche Form auf, daß der Ringraum zwischen der Flanschverbindung und dem jeweiligen gegenüberliegenden Dämmungsende weitgehend ausgefüllt ist, wobei die Ringteile in dem gezeigten Ausführungsbeispiel mit den Mantelflächen der angrenzenden Rohrleitungsdämmungen fluchtende Außenflächen aufweisen.

Mit dem Bezugzeichen 11 ist in den Fig. 1 und 3 ein eine Mantelabdeckung bildender Hohlzylinder aus dünnem Blech bezeichnet, der in der Art einer Muffe auf den gegenüberliegenden Enden der Rohrleitungsdämmung 2 aufsitzt. Der in dem gezeigten Ausführungsbeispiel verwendete Blechzylinder weist einen Längsschnitt derart auf, daß er zur Demontage aufgebogen und von der Rohrleitung entfernt werden kann. An den Endrändern des Blechzylinders sind, wie in der Fig. 1 zu sehen ist, Dichtungsstreifen 12a und 12b angebracht, durch die der Blechzylinder 11 gegen die Oberfläche der Dämmung, auf der der Blechzylinder an seinen Enden jeweils mit seiner Innenfläche aufliegt, abgedichtet ist. Bei den umlaufenden Dichtungsstreifen 12a und 12b handelt es sich in dem gezeigten Ausführungsbeispiel um Klebebänder. Durch die Abdichtung wird eine Durchfeuchtung des Ringraums und damit eine Durchfeuchtung der einen Kältverlust mindernden Ringteile auch bei Wechseltemperaturen vermieden.

Da, wie bereits erwähnt wurde, die Außenflächen der Ringteile 10a und 10b mit den angrenzenden Mantelflächen der Dämmungen fluchten, liegt der Blechzylinder 11 auch gegen diese Außenflächen an.

Mit den Bezugszeichen 3a und 3b sind in den Fig. 1 bis 3 Halbschalenteile aus Blech bezeichnet, die zu dem in den Fig. 2 und 3 gezeigten, einen die Mantelabdeckung und angrenzende Rohrdämmungsabschnitte umfassenden Rohrleitungsabschnitt umgebenden Gehäuse zusammengesetzt und, wie in dem gezeigten Beispiel, durch Schrauben miteinander verbunden werden können. Die schalenartigen Blechteile 3a und 3b weisen an ihren Öffnungsrändern einen nur an Ecken 17 unterbrochenen umlaufenden Flansch 13a bzw. 13b auf. Wenn die Halbschalen 3a und 3b zu dem in den Fig. 2 und 3 gezeigten Gehäuse zusammengesetzt sind, sind jeweils durch Teile dieser Öffnungsrandflansche einander gegenüberliegende Anlagefläche gebildet, über die die Halbschalen miteinander verschraubt werden können.

In dem gezeigten Ausführungsbeispiel sind Abdeckungen 5a und 5b aus einem nachgiebigen Kunststoffbahnmaterial mit dem umlaufenden Öffnungsrandflansch des Halbschalenteils 3a bzw. 3b verklebt, wobei die Abdeckungen jeweils bündig mit dem Rand des umlaufenden Flansches abschließen. In dem gezeigten Ausführungsbeispiel bestehen die Abdeckungen aus etwa 20 mm dicken Platten eines geschlossenzelligen halbharten Polyethylenschaums.

Die Halbschalenteile 3a und 3b weisen einander gegenüberliegende Endstirnwände 14a bzw. 14b auf, in denen Ausnehmungen 15a bzw. 15b für die Bildung von Rohrleitungsdurchgängen vorgesehen sind.

Mit 16a und 16b sind in den Halbschalen 3a und 3b vorgesehene Öfffnungen bezeichnet, über die in die durch die Abdeckungen 5a und 5b abgeschlossenen Halbschalen 3a und 3b ein aufschäumbares Dämmstoffmaterial gefüllt werden kann.

Bei der Installation der in den Fig. 1 bis 3 gezeigten Dämmung werden zunächst die im vorliegenden Ausführungsbeispiel aus symmetrischen Hälften bestehenden Ringteile 10a bzw. 10b in die zwischen der Flanschverbindung 1 und den dieser Verbindung zugewandten Enden der Rohrleitungsdämmung 2 gebildeten Ringräume eingesetzt. Je nach den Abmessungen der Flanschverbindung und dem Durchmesser der Rohrleitungsdämmungen könnten zum Beispiel auch über die Länge des dämmungsfreien Rohrabschnitts durchgehende Formteile verwendet werden, so daß die Flanschverbindung von Isolierteilen umschlossen ist. Sofern anstelle des Rohrleitungsabschnitts mit einer Flanschverbindung ein Rohrleitungsabschnitt mit einer Armatur zu dämmen wäre, könnten komplizierter geformte, an die Formen der Armatur angepaßte Flächen aufweisende Formteile zum Einsatz kommen. Nach Anbringung der Ringteile 10a und 10b wird der Blechzylinder 11 montiert, der zum Beispiel aus einer vorgebogenen Blechbahn, die zur Anpassung an die Rundungen der Rohrleitungsdämmung 2 bzw. Ringteile 10a und 10b weiter gebogen wird, herstellbar ist. Um einen festen Sitz des Blechzylinders 11 auf der Rohrleitungsdämmung zu gewährleisten, könnte die Blechbahn mit Bohrungen aufweisenden Endabwinkelungen versehen sein, über die die Blechbahnenden unter Aufspannung der Blechbahn auf die dagegen anliegenden Flächen der Rohrleitungsdämmung 2 bzw. der Ringteile 10a und 10b verschraubbar sind. Der in dem gezeigten Ausführungsbeispiel verwendeten Blechzylinder aus dünnem Blech weist nur einen geringfügig größeren Durchmesser als die Rohrleitungsdämmung auf, so daß er mit den Mantelflächen der Rohrleitungsdämmung im wesentlichen fluchtet.

Der Blechzylinder 11 wird danach mit Hilfe der Klebestreifen 12a und 12b an seinen Endrändern abgedichtet, indem der Endrand über seinen gesamten Umfang mit Hilfe der Klebestreifen überklebt wird.

Anschließend erfolgt die Installation der Halbschalen 3a und 3b, die, wie in der Fig. 3 gezeigt, über ihre Randflansche 13a und 13b mit den Abdeckungen 5a und 5b als Dichtungszwischenlage miteinander verschraubt werden. Es könnte auch vorgesehen sein, die beiden Halbschalenteile 3a und 3b über eine seitliche Scharnierverbindung derart miteinander zu verbinden, daß sie unter Einschluß des zu dämmenden Rohrleitungsabschnitts zusammenklappbar sind. In diesem Fall brauchte eine Verschraubung der Halbschalenteile nur auf einer Seite der Rohrleitung zu erfolgen.

Nachdem die Halbschalen installiert sind, wird in die Einfüllöffnungen 16a und 16b ein aufschäumbarer Kunststoff eingefüllt, der den durch die Abdeckungen 5a und 5b abgedeckten Schalenraum der Halbschalen 3a und 3b auffüllt und gegen die aus einem nachgiebigen Folien- oder Kunststoffbahnmaterial gebildeten Abdeckungen 5a und 5b einen Druck ausübt. Dieser Druck trägt dazu bei, daß die Abdeckungen 5a und 5b mit ihren den jeweiligen Halbschalen abgewandten Seiten derart abdichtend gegen den umschlossenen Rohrleitungsabschnitt zur Anlage kommen, daß ein Eindringen von Feuchtigkeit in den zwischen den Abdeckungen 5a und 5b und der Oberfläche der Rohrleitungsdämmung 2 bzw. des Blechzylinders 11 gebildeten Spalt weitgehend vermieden wird und der Ringraum dadurch zusätzlich abgedichtet ist.

Alle Teile der in den Fig. 1 bis 3 gezeigten Dämmung können nach Demontage der Dämmung, insbesondere zum erneuten Aufbau dieser Dämmung an Ort und Stelle, wiederverwendet werden. Der Dichtungsdruck zwischen den Abdeckungen 5a und 5b und dem umschlossenen Rohrleitungsabschnitt stellt sich beim erneuten Zusammenfügen der Halbschalenteile 3a und 3b zum Teil wieder ein.

Die in den Fig. 1 bis 3 gezeigte Dämmung läßt sich, da keine Hohlräume, in denen sich Kondenswasser niederschlagen könnte, vorhanden sind, vorteilhaft als Kältedämmung einsetzen, wobei sich eine besonders hohe Dämmwirkung erzielen läßt. Als Innendämmung in den durch den Blechzylinder 11 gebildeten Ringräumen kann ein Dämmstoffmaterial sehr geringer Dichte verwendet werden, das eine sehr hohe Dämmwirkung aufweist. Dieses Material, zum Beispiel ein geschlossenzelliges Schaumstoffmaterial, wird durch den Blechzylinder 11 vor Deformationen durch die Abdeckungen 5a und 5b geschützt, welche sich ohne den Blechzylinder unter dem Druck des aufschäumenden Dämmstoffmaterials in den abgedeckten Halbschalen in die Ringräume zwischen den Enden der Rohrleitungsdämmung hinein ausdehnen würden. Durch die Verwendung des Blechzylinders wird andererseits der von den Halbschalen mit den Abdeckungen zu umgreifende Rohrleitungsabschnitt so geglättet, daß wegen der dementsprechend geringen Ausdehnung der Abdeckungen zur Gewährleistung einer abdichtenden Umschließung nur ein verhältnismäßig geringer, durch den aufschäumenden Schaumstoff innerhalb der abgedeckten Halbschalen erzeugter Druck erforderlich ist.

## Patentansprüche

1. Dämmung für in Zeitabständen zu überprüfende Bauteile wie Armaturen, Flansche usw. in kältegedämmten Rohrleitungen (6) mit äußeren Rohrleitungsdämmungen (2), deren Enden voneinander beabstandet sind, wobei die Dämmung eine Dämmkassette mit einem zu öffnenden, aus zwei Halbschalen (3a, 3b) zusammengesetzten Gehäuse umfaßt, das im geschlossenen Zustand mindestes an gegenüberliegenden Stirnseiten Durchtrittsöffnungen (15a, 15b) für die Rohrleitungen (6) und zumindest eine Einfüllöffnung (16a, 16b) für aufschäumbaren Kunststoff aufweist, wobei die offenen Seiten der Halbschalen (3a, 3b) durch eine, an den Rändern der betreffenden Halbschalen (3a, 3b) befestigte, nachgiebige Dämmstoffplatte, Folie oder Kunststoffbahn verschlossen sind, **gekennzeichnet durch**
ein Abdeckelement (11), das muffenartig, jeweils mit den äußeren Rohrleitungsdämmungen (2) fluchtend auf den Enden der Rohrleitungsdämmungen (2) aufsitzt, wobei der Abstand zwischen diesen überbrückt und abgedichtet ist.

2. Dämmung nach Anspruch 1, **dadurch gekennzeichnet,** daß das Abdeckelement (11) durch einen Hohlzylinder (11) aus dünnem Blech gebildet ist.

3. Dämmung nach Anspruch 1 oder 2, **dadurch gekennzeichnet,** daß das Abdeckelement (11) einen abdichtbaren Längsschlitz aufweist, durch den das Abdeckelement zur Montage oder Demontage unter Biegung aufweitbar ist.

4. Dämmung nach einem der Ansprüche 1 bis 3, **dadurch gekennzeichnet,** daß das Abdeckelement aus mehreren Teilen zusammengesetzt ist.

5. Dämmung nach einem der Ansprüche 1 bis 4, **dadurch gekennzeichnet,** daß um den Umfang der Endränder des Abdeckelements (11) gegen das Abdeckelement (11) und die Rohrleitungsdämmung anliegende Dichtungsbänder (12) vorgesehen sind.

6. Dämmung nach Anspruch 5, **dadurch gekennzeichnet,** daß die Dichtungsbänder Klebebänder (12) umfassen.

7. Dämmung nach einem der Ansprüche 1 bis 6, **dadurch gekennzeichnet,** daß in Ringräume, die zwischen den Enden der Rohrleitungsdämmungen gebildet werden, Dämmstoffmaterial (10a, 10b) eingelegt ist.

8. Dämmung nach Ansprusch 7, **dadurch gekennzeichnet,** daß das in die Ringräume eingelegte Dämmstoffmaterial Formteile (10) umfaßt.

9. Dämmung nach Anspruch 8, **dadurch gekennzeichnet,** daß Formteile (10) in der Art von Halbschalen vorgesehen sind.

10. Dämmung nach einem der Ansprüche 7 bis 9, **dadurch gekennzeichnet,** daß das in die Ringräume einfüllbare Dämmstoffmaterial Dämmstoffmatten umfaßt.

11. Dämmung nach einem der Ansprüche 7 bis 10, **dadurch gekennzeichnet,** daß das in die Ringräume einfüllbare Dämmstoffmaterial loses Dämmstoffmaterial umfaßt.

12. Dämmung nach einem der Ansprüche 7 bis 11, **dadurch gekennzeichnet,** daß das in die Ringräume einfüllbare Dämmstoffmaterial Kunststoffschaum umfaßt.

13. Dämmung nach einem der Ansprüche 7 bis 12, **dadurch gekennzeichnet,** daß das in die Ringräume einfüllbare Dämmstoffmaterial an zum Beispiel Verbindungsflansche oder Armaturen angepaßte Formteile (10) umfaßt.

14. Dämmung nach einem der Ansprüche 7 bis 13, **dadurch gekennzeichnet,** daß die Ringräume vollständig mit Dämmstoffmaterial ausgefüllt sind.

15. Dämmung nach einem der Ansprüche 1 bis 14, **dadurch gekennzeichnet,** daß die Halbschalen (3a, 3b) wenigstens eine Einfüllöffnung (16) für innerhalb des abgedeckten Schalenraums aufschäumbares Dämmstoffmaterial aufweisen.

16. Dämmung nach einem der Ansprüche 1 bis 15, **dadurch gekennzeichnet,** daß das aus den Halbschalen (3a, 3b) zusammengesetzte Gehäuse in der Art einer Kassette auf- und zusammenklappbar ist.

17. Dämmung nach einem der Ansprüche 1 bis 16, **dadurch gekennzeichnet,** daß die Halbschalen (3a, 3b) einen sich wenigstens über einen Teil des Schalenrandes erstreckenden Randflansch (13) aufweisen.

18. Dämmung nach Anspruch 17, **dadurch gekennzeichnet,** daß der Randflansch (13) Bohrungen für eine Schraubverbindung zwischen den Halbschalen aufweist.

19. Dämmung nach Anspruch 17 oder 18, **dadurch gekennzeichnet,** daß die Folien oder Kunststoffbahnen (5) bündig mit dem Randflansch (13) abschließen.

20. Dämmung nach einem der Ansprüche 17 bis 19, **dadurch gekennzeichnet,** daß die Halbschalen über den Randflansch (13) mit den Folien oder Kunststoffbahnen (5a, 5b) als Dichtungszwischenlage verbunden sind.

21. Dämmung nach einem der Ansprüche 1 bis 20, **dadurch gekennzeichnet,** daß die Folien oder Kunststoffbahnen (5) ein Plattenmaterial umfassen.

22. Dämmung nach einem der Ansprüche 1 bis 21, **dadurch gekennzeichnet,** daß die Folien oder Kunststoffbahnen (5) einen halbharten Kunststoffschaum umfassen.

23. Dämmung nach einem der Ansprüche 1 bis 22, **dadurch gekennzeichnet,** daß die Folien oder Kunststoffbahnen (5) einen Polyethylenschaum umfassen.

24. Dämmung nach einem der Ansprüche 1 bis 23, **dadurch gekennzeichnet,** daß die Folien oder Kunststoffbahnen (5) zur Anpassung an die Oberfläche des mit dem Abdeckelement (11) versehenen Rohrleitungsabschnitts vorgeformt sind.

25. Dämmung nach einem der Ansprüche 1 bis 24, **dadurch gekennzeichnet,** daß das Gehäuse die Rohrleitung über eine Länge, die größer als die Länge des Abdeckelements (11) ist, umschließt.

## Claims

1. Insulation for components to be checked at intervals such as fittings, flanges etc. in cold-insulated pipes (6) with outer pipe insulating means (2) of which the ends are spaced apart from each other, wherein the insulation includes an insulating cassette with a housing to be opened, which is composed of two half-shells (3a, 3b) and which in the closed state at least at opposite end faces comprises through-openings (15a, 15b) for the pipes (6) and at least one filling opening (16a, 16b) for foamable plastic, wherein the open sides of the half-shells (3a, 3b) are closed by a sheet of flexible insulating material, film or plastic web attached to the edges of the respective half-shells (3a, 3b), characterised by a cover element (11) which is mounted in sleeve-like fashion, in each case aligned with the outer pipe insulating means (2), on the ends of the pipe insulating means (2), the gap between the latter being bridged and sealed.

2. Insulation according to claim 1, characterised in that the cover element (11) is formed by a hollow cylinder (11) of thin sheet metal.

3. Insulation according to claim 1 or 2, characterised in that the cover element (11) comprises a sealable longitudinal slot by which the cover element can be expanded with bending for assembly or dismounting.

4. Insulation according to any of claims 1 to 3, characterised in that the cover element is composed of several portions.

5. Insulation according to any of claims 1 to 4, characterised in that around the periphery of the end edges of the cover element (11) are provided sealing strips (12) which abut against the cover element (11) and the pipe insulation.

6. Insulation according to claim 5, characterised in that the sealing strips include adhesive strips (12).

7. Insulation according to any of claims 1 to 6, characterised in that insulating material (10a, 10b) is laid in annular spaces which are formed between the ends of the pipe insulating means.

8. Insulation according to claim 7, characterised in that the insulating material laid in the annular spaces includes mouldings (10).

9. Insulation according to claim 8, characterised in that mouldings (10) are provided after the fashion of half-shells.

10. Insulation according to any of claims 7 to 9, characterised in that the insulating material which can be introduced into the annular spaces includes mats of insulating material.

11. Insulation according to any of claims 7 to 10, characterised in that the insulating material which can be introduced into the annular spaces includes loose insulating material.

12. Insulation according to any of claims 7 to 11, characterised in that the insulating material which can be introduced into the annular spaces includes plastic foam.

13. Insulation according to any of claims 7 to 12, characterised in that the insulating material which can be introduced into the annular spaces includes mouldings (10) adapted to, for example, connecting flanges or fittings.

14. Insulation according to any of claims 7 to 13, characterised in that the annular spaces are completely filled with insulating material.

15. Insulation according to any of claims 1 to 14, characterised in that the half-shells (3a, 3b) comprise at least one filling opening (16) for insulating material which can be foamed within the covered shell space.

16. Insulation according to any of claims 1 to 15, characterised in that the housing composed of the half-shells (3a, 3b) can be hinged open and together after the fashion of a cassette.

17. Insulation according to any of claims 1 to 16, characterised in that the half-shells (3a, 3b) comprise an edge flange (13) extending over at least part of the shell edge.

18. Insulation according to claim 17, characterised in that the edge flange (13) comprises bores for a screw joint between the half-shells.

19. Insulation according to claim 17 or 18, characterised in that the films or plastic webs (5) end flush with the edge flange (13).

20. Insulation according to any of claims 17 to 19, characterised in that the half-shells are connected by the edge flange (13) to the films or plastic webs (5a, 5b) as an intermediate sealing layer.

21. Insulation according to any of claims 1 to 20, characterised in that the films or plastic webs (5) include a laminate.

22. Insulation according to any of claims 1 to 21, characterised in that the films or plastic webs (5) include a medium hard plastic foam.

23. Insulation according to any of claims 1 to 22, characterised in that the films or plastic webs (5) include a polyethylene foam.

24. Insulation according to any of claims 1 to 23, characterised in that the films or plastic webs (5) are preformed for adaptation to the surface of the pipe section provided with the cover element (11).

25. Insulation according to any of claims 1 to 24, characterised in that the housing surrounds the pipe over a length which is greater than the length of the cover element (11).

## Revendications

1. Isolation, pour des éléments de construction à contrôler périodiquement, telles que des robinetteries, des brides, etc., dans des tuyauteries (6) isolées contre le froid, avec des isolations de tuyauterie (2), dont les extrémités sont espacées les unes des autres, l'isolation comprenant une cassette d'isolation équipée d'un boîtier devant être ouvert et constitué de deux demi-coques (3a, 3b), boîtier qui, à l'état fermé, présente, au moins sur les faces frontales opposées, des ouvertures de passage (15a, 15b) destinées aux tuyauteries (6) et au moins une ouverture de remplissage (16a, 16b) destinée à une matière synthétique moussante, les faces ouvertes des demi-coques (3a, 3b) étant obturées au moyen d'une plaque d'une substance isolante, d'une feuille ou d'une bande de matière synthétique déformable, fixée sur les bords des demi-coques (3a, 3b) concernées, caractérisée par
un élément de recouvrement (11), engagé à la façon d'un manchon sur les isolations de tuyauterie (2), en affleurant aux extrémités des isolations respectives de tuyauterie (2), l'espacement entre celles-ci étant recouvert et obturé de façon étanche.

2. Isolation selon la revendication 1, caractérisée en ce que l'élément de recouvrement (11) est constitué par un cylindre creux (11) en tôle mince.

3. Isolation selon la revendication 1 ou la revendication 2, caractérisée en ce que l'élément de recouvrement (11) présente une fente longitudinale obturable de façon étanche, à travers laquelle l'élément de recouvrement peut être déployé en opérant une flexion, pour assurer le montage ou le démontage.

4. Isolation selon l'une des revendications 1 à 3, caractérisée en ce que l'élément de recouvrement est constitué de plusieurs parties.

5. Isolation selon l'une des revendications 1 à 4, caractérisée en ce qu'autour de la périphérie des bords d'extrémité de l'élément de recouvrement (11) sont prévues des bandes d'étanchéité (12) appuyant contre l'élément de recouvrement et l'isolation de tuyauterie.

6. Isolation selon la revendication 5, caractérisée en ce que les bandes d'étanchéité comprennent des bandes adhésives (12).

7. Isolation selon l'une des revendications 1 à 6, caractérisée en ce qu'un matériau d'isolation (10a; 10b) est introduit dans les espaces annulaires constitués entre les extrémités des isolations de tuyauterie.

8. Isolation selon la revendication 7, caractérisée en ce que le matériau d'isolation inséré dans les espaces annulaires comprend des pièces profilées (10).

9. Isolation selon la revendication 8, caractérisée en ce que les pièces profilées (10) sont prévues à la façon de demi-coques.

10. Isolation selon l'une des revendications 7 à 9, caractérisée en ce que le matériau d'isolation pouvant être introduit pour combler les espaces annulaires comprend des matelas de matériaux isolants.

11. Isolation selon l'une des revendications 7 à 10, caractérisée en ce que le matériau isolant pouvant être introduit pour combler l'espace annulaire comprend un matériau isolant lâche.

12. Isolation selon l'une des revendications 7 à 11, caractérisée en ce que le matériau isolant pouvant être introduit pour combler les espaces annulaires comprend une mousse synthétique.

13. Isolation selon l'une des revendications 7 à 12, caractérisée en ce que le matériau isolant pouvant être introduit pour combler les espaces annulaires comprend des pièces profilées (12) adaptées par exemple à des brides de liaison ou à des robinetteries.

14. Isolation selon l'une des revendications 7 à 13, caractérisée en ce que les espaces annulaires sont complètement remplis du matériau isolant.

15. Isolation selon l'une des revendications 1 à 14, caractérisée en ce que les demi-coques (3a, 3b) présentent au moins une ouverture de remplissage (16) pour le matériau isolant pouvant mousser à l'intérieur de l'espace de coque recouvert.

16. Isolation selon l'une des revendications 1 à 15, caractérisée en ce que le boîtier constitué des demi-coques (3a, 3b) est réalisé de manière à être ouvrable et refermable par rabattement à la façon d'une cassette.

17. Isolation selon l'une des revendications 1 à 16, caractérisée en ce que les demi-coques (3a, 3b) présentent une bride annulaire (13) s'étendant au moins sur une partie du bord de coque.

18. Isolation selon la revendication 17, caractérisée en ce que la bride de bordure (13) présente ces perçages destinés à assurer une liaison vissée entre les demi-coques.

19. Isolation selon la revendication 17 ou 18, caractérisée en ce que les feuilles ou les bandes de matière synthétique (5) se raccordent de façon jointive à la bride de bordure (13).

20. Isolation selon l'une des revendications 17 à 19, caractérisée en ce que les demi-coques placées sur la bride de bordure (13) sont reliées aux feuilles ou aux bandes de matière synthétique (5a, 5b) faisant office de couche intermédiaire d'étanchéité.

21. Isolation selon l'une des revendications 1 à 20, caractérisée en ce que les feuilles ou les bandes synthétiques (5) comprennent un matériau en plaques.

22. Isolation selon l'une des revendications 1 à 21, caractérisée en ce que les feuilles ou les bandes synthétiques (5) comprennent une mousse synthétique semi-dure.

23. Isolation selon l'une des revendications 1 à 22, caractérisée en ce que les feuilles ou les bandes synthétiques (5) comprennent une mousse de polyéthylène.

24. Isolation selon l'une des revendications 1 à 23, caractérisée en ce que les feuilles ou les bandes synthétiques (5) sont préformées pour obtenir une adaptation à la surface de la section de tuyauterie pourvue de l'élément de recouvrement (11).

25. Isolation selon l'une des revendications 1 à 24, caractérisée en ce que le boîtier enferme la tuyauterie sur une longueur supérieure à la longueur de l'élément de recouvrement (11).
